# EUROPÄISCHE PATENTSCHRIFT

(11) **EP 0 950 835 B1**
(45) Veröffentlichungstag und Bekanntmachung des Hinweises auf die Patenterteilung: **04.12.2002**
(21) Anmeldenummer: 99250111.4
(22) Anmeldetag: 09.04.1999
(51) Int. Cl.: F16H 57/02

(54) **Drehmomentstütze**
Torque transmitting coupling arrangement
Elément de réaction anti-couple

(30) Priorität: 17.04.1998 DE 19817931; 29.05.1998 DE 19825442
(43) Veröffentlichungstag der Anmeldung: 20.10.1999
(73) Patentinhaber: Demag Cranes & Components GmbH, 58300 Wetter (DE)
(72) Erfinder: Gievers, Winfried, Dipl.-Ing., 58300 Wetter (DE); Woyk, Rainer, 58313 Herdecke (DE); Glogowsky, Jens, Dipl.-Ing., 44143 Dortmund (DE); Schmidt, Heinz, Dipl.-Ing., 44227 Dortmund (DE)
(74) Vertreter: Meissner, Peter E., Dipl.-Ing.

(56) Entgegenhaltungen:
- EP-A- 0 847 127
- DE-A- 4 021 054
- DE-U- 8 606 067
- US-A- 5 152 538
- US-A- 5 156 069
- PATENT ABSTRACTS OF JAPAN vol. 018, no. 569 (M-1695), 31. Oktober 1994 (1994-10-31) -& JP 06 207699 A (TOYOTA MOTOR CORP), 26. Juli 1994 (1994-07-26)

## Beschreibung

Die Erfindung betrifft eine Drehmomentstütze gemäß dem Obergriff des Anspruchs 1.

Aus der DE 40 21 054 C2 ist eine Drehmomentstütze aus Kunststoff bekannt, die zwischen dem Gehäuse eines Radblockes und dem Gehäuse eines Getriebes angeordnet ist. Dabei ist die Drehmomentstütze auf einer Seite mit dem Radblockgehäuse und auf der anderen Seite mit dem Getriebegehäuse drehfest verbunden. Zur Befestigung am Radblockgehäuse weist die Drehmomentstütze einen Flansch mit Bohrungen auf, so daß diese mittels Schrauben an einer entsprechenden Fläche am Radblockgehäuse befestigbar ist. Die Verbindung mit dem Getriebe erfolgt über einen an der Drehmomentstütze ausgebildeten Außenring, der eine Innenverzahnung aufweist. In die Ringöffnung ist ein Innenring mit korrespondierender Außenverzahnung einsetzbar, der am Getriebegehäuse angeordnet ist. Zur Erzeugung einer spielfreien formschlüssigen Verbindung dient ein um den Außenring gelegtes Spannband, durch den der Außenring zusammengepreßt wird.

Eine derartige Drehmomentstütze hat sich weitestgehend bewährt. Nachteilig ist jedoch, daß am Getriebegehäuse ein Ring mit entsprechend aufwendiger Außenverzahnung vorhanden sein muß.

Der Erfindung liegt die Aufgabe zugrunde, eine einfach und kostengünstig herstellbare sowie mechanisch stabile Drehmomentstütze mit einer gewissen Elastizität zu schaffen, die an nahezu beliebige Getriebeanschlußflächenformen anpaßbar ist.

Die Lösung dieser Aufgabe ist gekennzeichnet durch die im Patentanspruch 1 angegebenen Merkmale. Durch die kennzeichnenden Merkmale der Unteransprüche 2 bis 9 ist die Drehmomentstütze in vorteilhafter Weise weiter ausgestaltet.

Die Lösung sieht vor, daß der schalenförmige einstückige Kunststoffgrundkörper im Spritzgußverfahren mit innerhalb der Schale angeordneten Stützstegen hergestellt ist, daß in den Kunststoffgrundkörper senkrecht zu der an das zweite Gehäuse anlegbaren Fläche ausgerichtete Buchsen eingespritzt sind, daß die Buchsen mit Befestigungsmitteln am zweiten Gehäuse unter kraftschlüssiger Anpressung der anlegbaren Fläche anpreßbar sind und daß die Durchgangsöffnungen an einem flanschartigen Randbereich des Kunststoffgrundkörpers ausgebildet sind. Die Verwendung der eingespritzten Buchsen macht es möglich, bei Befestigungsschrauben als Befestigungsmittel diese mit dem zulässigen Drehmoment anzuschrauben. Gleichzeitig findet ein Kraftschluß des Kunststoffgrundkörpers mit dem zweiten Gehäuse, also beispielsweise dem Getriebegehäuse, statt. Auf diese Weise wird der erforderliche axiale und radiale Kraftschluß zwischen der Drehmomentstütze und der antreibenden Einheit sichergestellt, der allein mit den Buchsen nicht erreichbar ist.

Der gewünschte Kraftschluß wird sichergestellt, wenn die Buchsen nicht über die schraubenkopfseitige Anlagefläche hinausragen, sondern höchstens mit dieser abschließen.

Herstellungstechnisch sehr einfach läßt sich die Drehmomentstütze herstellen, wenn die Buchsen mit Minustoleranz zur Anlagefläche der Schraubenkopfseite eingebettet sind. Auf diese Weise wird sichergestellt, daß die Buchsen höchstens mit der schraubenkopfseitigen Anlagefläche bündig abschließen. Die herstellungstechnisch bedingten Toleranzen sorgen dafür, daß stets ein einwandfreier Kraftschluß ohne zusätzlichen Aufwand sichergestellt ist.

Die Schrauben können mit großen Drehmoment angezogen werden, wenn die Buchsen als Metallzylinderbuchsen ausgebildet sind.

Für eine gleichmäßige Anlage der Drehmomentstütze an dem zweiten Gehäuse ist es von Vorteil, wenn die anlegbare Fläche eine Kreisringfläche ist.

Eine hohe Festigkeit der Drehmomentstütze wird erzielt, wenn die Stützstege (9) sternförmig mit einem Zylinderring (9a) im Zentrum angeordnet sind.

Eine gleichmäßige Verteilung der Anpreßkräfte ergibt sich, wenn in die Buchsen in gleichem Winkelabstand zueinander und mit gleicher Entfernung zur Längsachse des Zylinderrings angeordnet sind.

Aus Gründen der Formgenauigkeit weist der Kunststoffgrundkörper eine konstante Wandstärke auf.

Ein Ausführungsbeispiel der Erfindung ist in der Zeichnung dargestellt und wird nachfolgend näher beschrieben. Es zeigen:
- Fig. 1: eine räumliche Darstellung einer Drehmomentstütze von vorn gesehen,
- Fig. 2: die Drehmomentstütze gemäß Fig. 1 von hinten gesehen,
- Fig. 3: einen Querschnitt durch die Drehmomentstütze gemäß Fig. 1 und
- Fig. 4: einen vergrößerten Ausschnitt der Drehmomentstütze gemäß Fig. 3.

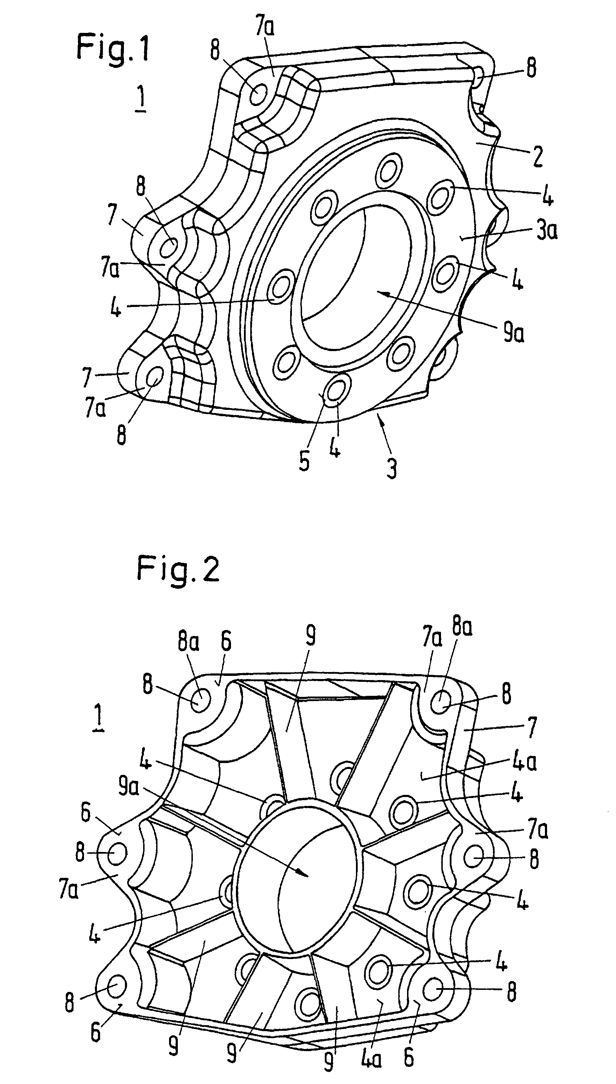

Fig. 1 zeigt eine räumliche Darstellung einer Drehmomentstütze 1, die zwischen einem Radblockgehäuse (erstes Gehäuse einer angetriebenen Einheit) und einem Getriebegehäuse (zweiten Gehäuse einer antreibenden Einheit) angeordnet wird, um die auftretenden Drehmomente abzustützen. Die Drehmomentstütze 1 weist einen Kunststoffgrundkörper 2 auf, der schalenförmig ausgebildet ist. Auf der Vorderseite des Kunststoffgrundkörpers 2 ist eine als Kreisringfläche 3a ausgebildete Anlagefläche 3 ausgebildet. In der ebenen Kreisringfläche 3a sind in gleichem Winkelabstand zueinander hohlzylindrische Buchsen 4 vorgesehen, welche mit ihrer Längsachse senkrecht zur Kreisringfläche 3a ausgerichtet sind. Eine der beiden Stirnflächen 5 der Buchsen 4 schließt höchstens bündig mit der Kreisringfläche 3a ab.

Fig. 2 zeigt die Drehmomentstütze von hinten, wobei sehr gut die schalenartige Ausbildung erkennbar ist. Parallel zur Kreisringfläche 3a weist die Drehmomentstütze 1 eine ebene Anlagefläche 6 auf, die an einem flanschartigen plattenförmigen Rand 7 nach Art eines Außenflansches 7a ausgebildet ist. Im Rand 7 (Außenflansch 7a) sind gespritzte Durchgangsöffnungen 8 vorgesehen. In bezug auf die Symmetrieebene, die die Anlageflächen 3a und 6 senkrecht schneidet, sind auf gleicher Höhe beidseitig jeweils eine Durchgangsöffnung 8 in gleichem Abstand von der Symmetrieebene angeordnet. In Fig. 2 sind drei Paare solcher Durchgangsöffnungen 8 dargestellt. Das oberste Paar wird von den Durchgangsöffnungen 8a gebildet usw. Der im Spritzgußverfahren hergestellte Kunststoffgrundkörper 2 weist eine annähernd konstante Wandstärke auf und ist zusätzlich mit innenliegenden Stützstegen 9 versehen. Die Stützstege 9 verlaufen sternförmig, mit einem Zylinderring 9a im Zentrum, mit dem die Stützstege 9 verbunden sind.

Durch den Zylinderring 9a in der Mitte ist die Drehmomentstütze 1 verläuft die Antriebswelle. Die Zylinderring 9a ist senkrecht zu den Anlageflächen 3a, 6 ausgerichtet. Der Abstand der Buchsen 4 von der Symmetrielängsachse des Zylinderrings 9a ist für alle Buchsen 4 gleich.

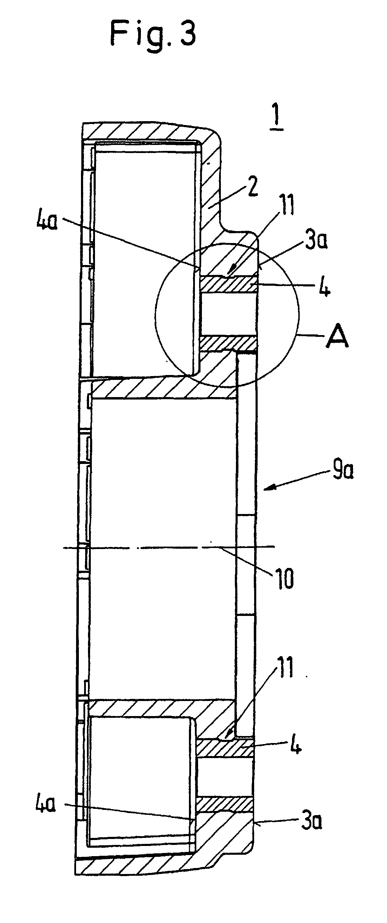

Fig. 3 zeigt einen Querschnitt durch die Drehmomentstütze 1. In Fig. 3 ist der konstante Abstand der Buchsen 4 von der Längsachse 10 der Zylinderring 9a zu erkennen. Die Buchsen 4 sind als Metallzylinderbuchsen ausgebildet und weisen zusätzlich eine radiale Nut 11 auf, um die Lage der eingespritzten Buchsen 4 zu sichern. Die stirnseitig nahezu bündig mit der Kreisringfläche 3a abschließenden Buchsen 4 sind mit Minustoleranz in der Drehmomentstütze 1 eingespritzt. D. h. die Einbettung der Buchsen 4 erfolgt so, daß diese nicht über die Anlagefläche 4a hinausragen, sondern höchstens bündig mit dieser abschließen. Im Normalfall weisen die Buchsen 4 einen geringen Abstand von maximal 1/10 Millimeter zur Anlagefläche 4a der Schraubenkopfseite auf.

Die Montage der Drehmomentstütze 1 erfolgt meist so, daß diese mit der Kreisringfläche 3a an einer entsprechenden Anlagefläche eines Getriebegehäuses befestigt wird. Zur Befestigung werden Schrauben durch die Buchsen 4 gesteckt und die Drehmomentstütze 1 am Getriebegehäuse festgeschraubt, wobei die Schrauben mit dem maximal zulässigen Drehmoment anschraubbar sind, ohne daß es zu einem Fließen des Kunststoffs kommt. Die Buchsen 4 sorgen für eine kraftschlüssige Verbindung mit dem Getriebegehäuse, wobei die Buchsen 4 gleichzeitig die Kreisringfläche 3a an die Anlagefläche des Getriebegehäuses anpressen. Auf diese Weise wird eine kraftschlüssige Verbindung zwischen dem Kunststoffgrundkörper 2 und dem Getriebegehäuse hergestellt. Anschließend kann die Drehmomentstütze 1 beispielsweise an einem Radblock befestigt werden, indem Schrauben durch die Durchführungen 8 hindurch gesteckt und anschließend festgeschraubt werden. Die Antriebswelle des Getriebes verläuft durch die Zylinderring 9a. Winkelfehler zwischen dem Getriebe und dem Radblock werden durch die Elastizität des Kunststoffs ausgeglichen. Außerdem dämpft der Kunststoff auftretende Drehmomentspitzen. Im Ausführungsbeispiel kann die Drehmomentstütze in Schritten von 45° gedreht befestigt werden.

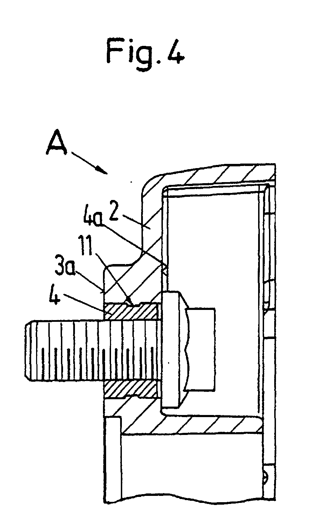

In Fig. 4 ist ein vergrößerten Ausschnitt A der Drehmomentstütze gemäß Fig. 3 mit eingesetzter Schraube gezeigt.

### Bezugszeichenliste:

- 1: Drehmomentstütze
- 2: Kunststoffgrundkörper
- 3: anlegbare Fläche
- 3a: Kreisringfläche
- 4: Buchse
- 4a: (ebene) schraubenkopfseitige Anlagefläche
- 5: Stirnfläche
- 6: (ebene) Anlagefläche (Getriebeseite)
- 7: Rand
- 7a: Außenflansch
- 8: Durchgangsöffnung
- 9: Stützsteg
- 9a: Zylinderring
- 10: Längsachse
- 11: Nut

## Patentansprüche

1. Drehmomentstütze zwischen einem ersten Gehäuse einer angetriebenen Einheit und einem zweiten Gehäuse einer antreibenden Einheit, mit einem jeweils auf einer Seite mit dem ersten Gehäuse und dem zweiten Gehäuse drehfest verbundenen schalenförmigen und einstückigen Kunststoffgrundkörper (2), der zur Befestigung des ersten Gehäuses in einer Ebene liegend eine Anlagefläche (6) mit Durchgangsöffnungen (8) aufweist, wobei an dem Kunststoffgrundkörper ebenfalls in einer Ebene liegend eine weitere an das zweite Gehäuse anlegbare Fläche (3) ausgebildet ist,
**dadurch gekennzeichnet,**
**daß** der schalenförmige einstückige Kunststoffgrundkörper (2) im Spritzgußverfahren mit innerhalb der Schale angeordneten Stützstegen (9) hergestellt ist,
**daß** in den Kunststoffgrundkörper (2) senkrecht zu der an das zweite Gehäuse anlegbaren Fläche (3) ausgerichtete Buchsen (4) eingespritzt sind,
**daß** die Buchsen (4) mit Befestigungsmitteln am zweiten Gehäuse unter kraftschlüssiger Anpressung der anlegbaren Fläche (3) anpreßbar sind und
**daß** die Durchgangsöffnungen (8) an einem flanschartigen Randbereich (7a) des Kunststoffgrundkörpers (2) ausgebildet sind.

2. Drehmomentstütze nach Anspruch 1,
**dadurch gekennzeichnet,**
**daß** die Buchsen (4) nicht über die anlegbare Fläche (3) hinausragen, sondern höchstens bündig mit dieser abschließen.

3. Drehmomentstütze nach Anspruch 1,
**dadurch gekennzeichnet,**
**daß** die Buchsen (4) mit Minustoleranz zur schraubenkopfseitigen Anlagefläche (4a) eingebettet sind.

4. Drehmomentstütze nach einem der Ansprüche 1 bis 3,
**dadurch gekennzeichnet,**
**daß** die Buchsen (4) als Metallzylinderbuchsen ausgebildet sind.

5. Drehmomentstütze nach einem der Ansprüche 1 bis 4,
**dadurch gekennzeichnet,**
**daß** die anlegbare Fläche (3) eine Kreisringfläche (3a) ist.

6. Drehmomentstütze nach nach einem der Ansprüche 1 bis 5,
**dadurch gekennzeichnet,**
**daß** die Stützstege (9) sternförmig mit einem Zylinderring (9a) im Zentrum angeordnet sind.

7. Drehmomentstütze nach nach einem der Ansprüche 1 bis 6,
**dadurch gekennzeichnet,**
**daß** die Buchsen (4) in gleichem Winkelabstand zueinander und mit gleicher Entfernung zur Längsachse (10) des Zylinderrings (9a) angeordnet sind.

8. Drehmomentstütze nach einem der Ansprüche 1 bis 7,
**dadurch gekennzeichnet,**
**daß** der Kunststoffgrundkörper (2) mit konstanter Wandstärke ausgebildet ist.

9. Drehmomentstütze nach einem der Ansprüche 1 bis 8,
**dadurch gekennzeichnet,**
**daß** die Buchsen (4) eine radiale Nut (11) aufweisen.

## Claims

1. Torque-transmitting coupling arrangement between a first housing of a driven unit and a second housing of a driving unit, having a shell-like, integral plastics base body (2), which is non-rotatably connected on a respective side to the first housing and the second housing and which, for fixing of the first housing, lying in one plane, has a contact face (6) with through apertures (8), wherein on the plastics base body, also lying in one plane, a further face (3) applicable to the second housing, is formed, **characterised in that** the shell-like, integral plastics base body (2) is manufactured by the injection moulding process with support webs (9) disposed inside the shell, **in that** bushes (4) aligned perpendicular to the face (3) applicable to the second housing are moulded in the plastics base body (2), **in that** the bushes (4) are pressable with fixing means against the second housing under the non-positive pressure of the applicable face (3), and **in that** the through apertures (8) are formed on a flange-like edge region (7a) of the plastics base body (2).

2. Torque-transmitting coupling arrangement according to claim 1, **characterised in that** the bushes (4) do not project beyond the applicable face (3), but at most end flush therewith.

3. Torque-transmitting coupling arrangement according to claim 1, **characterised in that** the bushes (4) are embedded with a negative tolerance with respect to the contact face (4a) on the screw-head side.

4. Torque-transmitting coupling arrangement according to one of claims 1 to 3, **characterised in that** the bushes (4) are formed as metal cylindrical bushes.

5. Torque-transmitting coupling arrangement according to one of claims 1 to 4, **characterised in that** the applicable face (3) is a circular annular face (3a).

6. Torque-transmitting coupling arrangement according to one of claims 1 to 5, **characterised in that** the support webs (9) are arranged in stellar form with a cylindrical ring (9a) in the centre.

7. Torque-transmitting coupling arrangement according to one of claims 1 to 6, **characterised in that** the bushes (4) are spaced at regular angles and with the same distance from the longitudinal axis (10) of the cylindrical ring (9a).

8. Torque-transmitting coupling arrangement according to one of claims 1 to 7, **characterised in that** the plastics base body (2) is formed with a constant wall thickness.

9. Torque-transmitting coupling arrangement according to one of claims 1 to 8, **characterised in that** the bushes (4) have a radial groove (11).

## Revendications

1. Support de couple entre un premier boîtier d'une unité entraînée et un second boîtier d'une unité d'entraînement, comportant un corps de base en matière synthétique en une pièce et en forme de coque (2), relié de façon solidaire en rotation, à chaque fois, sur un côté au premier boîtier et au second boîtier, corps qui présente une surface d'appui avec des ouvertures de passage (8) en se trouvant dans un plan pour la fixation du premier boîtier, une autre surface (3) pouvant s'appuyer contre le second boîtier étant réalisée sur le corps de base en matière synthétique en se trouvant de même dans un plan,
**caractérisé en ce que** le corps de base en matière synthétique (2) en une pièce en forme de coque est fabriqué par un procédé de coulée par injection avec des âmes de support (9) agencées à l'intérieur de la coque, **en ce que**, dans le corps de base en matière synthétique (2), des douilles (4) orientées perpendiculairement à la surface (3) pouvant être appliquée contre le second boîtier sont injectées, **en ce que** les douilles (4) peuvent être pressées avec des moyens de fixation contre le second boîtier par pressage sous l'influence d'une force de la surface d'appui (3), et **en ce que** les ouvertures de passage (8) sont réalisées sur une zone marginale du type rebord (7a) du corps de base en matière synthétique (2).

2. Support de couple selon la revendication 1,
**caractérisé en ce que** les douilles (4) ne font pas saillie au-dessus de la surface d'appui (3), mais se terminent au plus à fleur de celle-ci.

3. Support de couple selon la revendication 1,
**caractérisé en ce que** les douilles (4) sont noyées avec un écart inférieur par rapport à la surface d'appui (4a) du côté de la tête de vis.

4. Support de couple selon une des revendications 1 à 3,
**caractérisé en ce que** les douilles (4) sont réalisées comme des douilles cylindriques métalliques.

5. Support de couple selon une des revendications 1 à 4,
**caractérisé en ce que** la surface d'appui (3) est une surface annulaire (3a).

6. Support de couple selon une des revendications 1 à 5,
**caractérisé en ce que** les âmes de support (9) sont agencées en forme d'étoile avec une bague cylindrique (9a) au centre.

7. Support de couple selon une des revendications 1 à 6,
**caractérisé en ce que** les douilles (4) sont agencées à un même écart angulaire l'une par rapport à l'autre et à un même éloignement par rapport à l'axe longitudinal (10) de la bague cylindrique (9a).

8. Support de couple selon une des revendications 1 à 7,
**caractérisé en ce que** le corps de base en matière synthétique (2) est réalisé en ayant une épaisseur de paroi constante.

9. Support de couple selon une des revendications 1 à 8,
**caractérisé en ce que** les douilles (4) présentent une rainure radiale (11).
